Europäisches Patentamt

European Patent Office

Office européen des brevets

(11) Veröffentlichungsnummer: **0 255 642 B1**

(19)

(12)

# EUROPÄISCHE PATENTSCHRIFT

(45) Veröffentlichungstag der Patentschrift: 04.12.91

(51) Int. Cl.⁵: **B01F 3/04, C02F 3/00**

(21) Anmeldenummer: 87110469.1

(22) Anmeldetag: 20.07.87

(54) Flüssigkeits-Gas-Dispersionsreaktor.

(30) Priorität: 02.08.86 DE 3626231

(43) Veröffentlichungstag der Anmeldung:
10.02.88 Patentblatt 88/06

(45) Bekanntmachung des Hinweises auf die
Patenterteilung:
04.12.91 Patentblatt 91/49

(84) Benannte Vertragsstaaten:
AT BE CH DE ES FR GB GR IT LI LU NL SE

(56) Entgegenhaltungen:
EP-A- 0 034 739      DE-A- 3 536 057
US-A- 4 033 875      US-A- 4 042 510
US-A- 4 238 338      US-A- 4 683 122

(73) Patentinhaber: **Velebil, Gerhard**
**Im Brühl 6**
**W-7846 Schliengen 3(DE)**

Patentinhaber: **Harris, C. J.**
**Henstridge House Henstridge**
**Templecombe Somerset BA8 0QG(GB)**

(72) Erfinder: **Velebil, Gerhard**
**Im Brühl 6**
**W-7846 Schliengen 3(DE)**
Erfinder: **Harris, C. J.**
**Henstridge House Henstridge**
**Templecombe Somerset BA8 0QG(GB)**

(74) Vertreter: **Schmitt, Hans, Dipl.-Ing. et al**
**Patentanwälte Dipl.-Ing H. Schmitt Dipl.-Ing.**
**W. Maucher Dreikönigstrasse 13**
**W-7800 Freiburg(DE)**

## Beschreibung

Die Erfindung betrifft ein Verfahren zur Aufrechterhaltung einer Flüssigkeits-Gas-Dispersion in einem vertikalen Behälter gemäß dem Oberbegriff des Patentanspruches 1.

Die Erfindung betrifft ferner eine Vorrichtung zur Aufrechterhaltung einer Flüssigkeits-Gas-Dispersion in einem vertikalen Behälter gemäß dem Oberbegriff des Patentanspruches 12.

Ein Verfahren und eine Vorrichtung dieser Art sind in der Anmeldung P 35 36 057.7 vorgeschlagen. Durch dieses Verfahren kann die Höhe des Reaktionsbehälters niedrig gehalten werden, ohne die Verweilzeit des gelösten Gases im Reaktionsgemisch dadurch zu verringern. Hierauf kommt es deshalb an, weil für biochemische Reaktionen, insbesondere Reaktionen zwischen sauerstoffhaltigen Gasen -insbesondere Luft- und der in der Reaktionsflüssigkeit befindlichen aktiven Biomasse für einen wirtschaftlichen Betrieb bei hoher Reaktionsausbeute und kurzer Reaktionszeit es neben einer hohen Biomasse-Konzentration und optimaler Reaktionstemperatur insbesondere auf eine hohe Effizienz des eingetragenen, sauerstoffhaltigen Gases und damit auch auf eine genügend lange Verweilzeit des Gases im Reaktionsgemisch ankommt.

Das oben bezeichnete, bekannte Verfahren zeichnet sich zwar durch Effektivität wie auch durch Einfachheit aus. Es besteht dabei jedoch noch das Problem, daß -durch Reibungsverluste im Reaktorsystem bedingt- sich die kreisförmige Strömungsgeschwindigkeit mit zunehmender durchlaufener Reaktorhöhe soweit verringert, daß eine Ent-Mischung der beteiligten Reaktionspartner auftritt, bzw. die kreisförmig, leicht aufwärts gerichtete in eine stark aufwärts gerichtete Strömung übergeht und somit die Verweilzeit der Dispersion in der Reaktionsflüssigkeit -gegenüber dem Fall gleichbleibender, kreisförmiger Strömungsgeschwindigkeit erheblich reduziert wird.

Der Erfindung liegt deshalb die Aufgabe zugrunde, ein Verfahren und eine Vorrichtung der eingangs erwähnten Art zu schaffen, bei welchen die Verweilzeit der Dispersion, vor allem im oberen Teil des Reaktionsgefäßes verlängert wird, ohne daß dadurch die Einfachheit und Effektivität des bekannten Verfahrens und der bekannten Vorrichtung aufgegeben werden.

Die Lösung dieser Aufgabe erfolgt mit den Merkmalen des kennzeichnenden Teiles des Patentanspruches 1.

Die Unterbrechung der aufwärts gerichteten Strömung verhindert zunächst, daß auch bei sich verlangsamender Zirkularströmung die Dispersion bzw. das Gas an die Oberfläche der Reaktionsflüssigkeit entweichen kann. Die Drosselung der Strömung bewirkt zudem eine Druckerhöhung, welches einer verstärkten Koaleszenz entgegenwirkt und die Dispersion somit stabilisiert. Auf diese Weise wird die Verweilzeit des Gases im Recktionsgemisch gegenüber der Verweilzeit des Gases bei freier Strömung im Reaktionsgefäß verlängert.

Das erfindungsgemäße Verfahren verbessert somit durch die Stauung der zirkulierenden Reaktionsflüssigkeit in einem unteren Behälterteil die Durchmischung der Reaktionsflüssigkeit mit dem Gas und verlängert durch die Unterbrechung der aufwärts gerichteten Strömung die Verweilzeit des Gases. Beide Effekte effektivieren somit den Reaktionsprozeß in der gewünschten Weise. Durch den Mehrfachkreislauf wird die verfügbare Reaktionszeit der Flüssigkeit darüberhinaus beliebig verlängerbar, so daß auch aus diesem Grunde auf hohe Behälter verzichtet werden kann, ohne dadurch die notwendige Reaktionszeit der Flüssigkeit zu unterschreiten.

Das erfindungsgemäße Verfahren kann dadurch weiter entwickelt werden, daß die nach oben gerichtete, schraubenförmige Strömung mehrmals unterbrochen und an jeder Unterbrechung gedrosselt und hinter der Drosselstelle erneut als schraubenförmig nach oben gerichtete Strömung fortgesetzt wird.

Die an sich wünschenswerte Vermehrung der Anzahl der Drosselstellen bzw. der Unterbrechungen der aufwärts gerichteten Strömung würde ohne zusätzliche, gezielte Verfahrensschritte auch die zirkulare Strömung drosseln und damit zu einem Aufsteigen des Gases in den oberen Teil des jeweiligen Behälterabschnittes führen. Das Durchmischungsverhältnis und damit die Effektivität des Reaktionsprozesses würden somit verschlechtert. Dieser Nachteil wird jedoch dadurch vermieden, daß hinter jeder Drosselstelle die Strömung schraubenförmig nach oben fortgesetzt wird. Unter dieser Voraussetzung wird die Anbringung mehrere Unterbrechungen bzw. Drosselstellen im Behälter möglich, so daß die Verweilzeit der Dispersion im Reaktionsbehälter in wünschenswerter Weise weiter verlängert werden kann.

Die zur Aufrechterhaltung der schraubenförmigen Strömung hinter den Drosselstellen erforderliche Energie wird den einzelnen Abschnitten des Behälters durch einen Überdruck zugeführt, der durch die Zufuhr der Flüssigkeits-Gas-Dispersion unter Unterbrechung bzw. Drosselung der nach oben gerichteten Strömung erzeugt wird. Die als Druck vorhandene potentielle Energie in den einzelnen Abschnitten des Behälters wird an den Übergängen der Behälterabschnitte in kinetische Energie, d. h. eine erhöhte Strömungsgeschwindigkeit im Bodenbereich des neuen Behälterabschnittes umgesetzt. Diese wesentlich erhöhte Strömungsgeschwindigkeit im Bodenbereich eines jeden Behälterabschnittes ist hierbei lokal begrenzt.

Es erweist sich deshalb in weiterer Ausgestaltung der Erfindung als vorteilhaft, wenn diese lokal erhöhte Strömung in dem neuen Behälterabschnitt jeweils an dessen unterem Bereich im wesentlichen horizontal und etwa tangential zur Wandung des Behälters geführt wird. Auf diese Weise ergibt sich am Boden des jeweils neuen Behälterabschnittes eine neue durch diese Strömung induzierte Zirkularströmung, wodurch die die Strömung insgesamt unterbrechende Wirkung einer einfachen Drosselung der aufwärts gerichteten Strömung wieder aufgehoben wird. Im Ergebnis wird damit die aufwärts gerichtete Strömung, so wie sie in einem Einkammerbehälter auftritt, gebremst und die Zirkularströmung bis in den oberen Behälterbereich aufrechterhalten.

Die Zirkularströmung kann dadurch noch stärker und gleichmäßiger gemacht werden, daß auf der Ebene eine Unterbrechung der aufwärts gerichteten Strömung in dem Behälter wenigstens zwei gedrosselte Übergangsströmungen, vorzugsweise am Umfang des Behälters einander gegenüberliegend, weitergeführt werden.

Werden mehrere, wenigstens zwei Drosselkanäle vorgesehen, so kann bei gleicher Zirkularströmungsleistung die Austrittsgeschwindigkeit der überströmenden Reaktionsflüssigkeit am Austritt der Drosselkanäle reduziert werden. Die Zirkularströmung wird auf diese Weise gleichmäßiger. Je nach den Anforderungen des Reaktionsprozesses kann es sinnvoll sein, zwei, drei oder mehrere Drosselkanäle vorzusehen.

Dadurch, daß die Strömung an ihrem oberen Ende erneut gedrosselt und hinter der Drosselstelle zentral im Innern des Behälters und von der aufwärts gerichteten unterbrochenen Strömung getrennt abwärts geführt wird, wobei wenigstens zeitweise ein Teil von dieser Strömung abgezweigt und zum Austritt des Behälters geleitet wird, kann ein Mehrfachdurchlauf der Reaktonsflüssigkeit organisiert werden, der die Aufenthaltszeit dieses Gemisches im Reaktionsbehalter vervielfachen kann.Je nachdem welche Menge der Strömung abgezweigt wird und zu welcher Zeit dies geschieht und wie groß der Anteil des frisch zugeführten Dispersionsgemisches ist, kann die mittlere Verweilzeit des Gases in der Reaktionsflüssigkeit variiert werden. Die Effektivität des Reaktionsprozesses kann somit unter den Gesichtspunkten der Reaktionszeit, des Energieverbrauches, der Nutzung der chemischen Ausgangsstoffe usw. optimiert werden.

Es erweist sich als zweckmäßig, wenn die Eintrittsgeschwindigkeit der Flüssigkeits-Gas-Dispersion am unteren ersten Eintritt in den Behälter und der Eintrittsdruck für diese Flüssigkeits-Gas-Dispersion so hcch bemessen werden, daß die über die Höhe des Behälters unterbrochene und abnehmende, hinter der Unterbrechung jeweils erneut aufgebaute Umfangsgeschwindigkeit über der Steiggeschwindigkeit der Gasblasen in der unter Druck stehenden Dispersion liegt

Durch diese Maßnahme wird innerhalb eines Behälters der Weg der Flüssigkeits-Gas-Dispersion und somit der Gasbläschen erheblich gegenüber einer aufwärts- und/oder abwärts gerichteten Strömung verlängert , so daß die Höhe des Behälters wesentlich besser ausgenutzt bzw. reduziert werden kann und dennoch einen großen Strömungsweg und somit eine lange Verweilzeit erlaubt.

Die Reaktions intensität und damit die in Bezug auf die gesamte Reaktionsflüssigkeit sich ergebende Reaktionsgeschwindigkeit kann auch erheblich gesteigert werden, wenn in wenigstens einem Behälterabschnitt die Strömung durch ein Trägermaterial für Mikroorganismen geführt wird. Dieses Trägermaterial, welches vorzugsweise aus gekörnter Aktivkohle, Sand, Braunkohlen, Koks -Peletts, Hartkohle u.a. mit einer Körnung von 0.2 bis 3.0 mm besteht, bildet dabei den Boden für Mikroorganismen, die notwendige Voraussetzung für den Reaktionsprozeß sind. Dieses Tragermaterial erweist sich insbesondere für solche Mikroorganismen als günstig, die langsam wachsen oder leicht ausschwemmbar sind, wie z.B. insbesondere nitrifizierende oder methanbildende Bakterien. Diese können sich in den Poren des Trägermaterials festsetzen und sind somit gegen ein Ausschwemmen gegen die Strömung geschützt. Dabei erweist es sich als besonders zweckmäßig, die Zirkulationsgeschwindigkeit im System so festzulegen, daß das Trägermaterial in den Druckbereichen des Behälters kreist, ohne aus diesen hinaus zu gelangen und dabei von der Reaktionsflüssigkeit kreisend von unten nach oben durchlaufend wird. Auf diese Weise wirken die Mikroorganismen gleichmäßig in der Reaktionsflüssigkeit verteilt, so daß auch das in der Reaktionsflüssigkeit verteilte Gas effektiver und schneller genutzt wird. Gleichmäßige Verteilung des Gases in der Flüssigkeit durch die stabilisierte Zirkulation der Dispersion sowie die auf dem Trägermaterial zirkulierenden biologisch aktiven Mikroorganismen ergänzen sich so in günstiger Weise mit der Folge einer weiteren Verkürzung der notwendigen Verweilzeit der Dispersion im Reaktionsbehälter.

Die zur Lösung der Aufgabe dienende Vorrichtung der eingangs erwähnten Art ist dadurch gekennzeichnet, daß im Querschnitt des Behälters oberhalb des Eintrittes wenigstens eine den von unten nach oben durchströmenden Behälterquerschnitt ausfüllende und abdichtende Stauwand vorgesehen ist, die zumindest eine oberhalb von ihr tangential zur Wandung des Behälters gerichtete Durchtrittsöffnung für die Fortsetzung der Strömung der Flüssigkeits-Gas-Dispersion hat, und daß der Behälter in in seinem oberen Bereich eine abschließende Stauwand für die aufwärts gerichtete Strömung aufweist und der obere Behälterbereich mit der Rückführleitung über wenigstens eine Durchtrittsöffnung verbunden ist.

Je nach dem vorhandenen Staudruck ergibt sich im Bereich der Durchtrittsöffnung ein Bereich mit erhöhter Strömungsgeschwindigkeit mit Richtung in den nach oben abgetrennten Behälterteil. Die gewünschte Zirkularströmung im oberen Behälterteil wird in einfacher Weise durch die zur Wandung des Behälters tangentiale Ausrichtung der Durchtrittsöffnung erreicht. Die Anregung zur Zirkularströmung in diesem Behälterteil benötigt damit keine aufwendige Mechanik und läßt sich somit durch einfache Maßnahmen und preiswert realisieren.

In Fortsetzung dieses Prinzips können mehrere Stauwände mit drosselnden und oberhalb von ihnen tangential zur Behälterwandung angeordneten Durchtrittsöffnungen, vorzugsweise etwa gleichmäßig über die Höhe des Behälters verteilt, vorgesehen werden. Auf diese Weise wird die gewünschte, über die gesamte Behälterhöhe verlaufende Zirkularströmung aufrecht erhalten. Die Zahl der vorzusehenden Stauwände kann den Reibungsverlusten der Zirkularströmung, u.a. abhängig von der Größe des Behälters, angepaßt werden.

Es erweist sich als zweckmäßig, wenn der Behälter auch in seinem oberen Bereich eine weitere Stauwand für die aufwärts gerichtete Strömung und eine zu dem unteren Behälterbereich führende Rückführleitung aufweist und der obere Behälterbereich mit der Rückführleitung über wenigstens eine weitere Drossel-Öffnung verbunden ist.

Um die Rückführleitung so kurz wie möglich und die Konstruktion insgesamt so einfach wie möglich auszugestalten, ist es vorteilhaft, wenn die Rückführleitung von dem oberen zu dem unteren Behälterbereich als vorzugsweise zentrales Rohr im Inneren des Behälters ausgebildet ist, welches gleichzeitig mit dem oberen Austrittsbereich für die bearbeitete Flüssigkeit und das aus der Dispersion freiwerdende Gas verbunden ist. Dabei beträgt der Durchmesser des vorzugsweise zylindrischen und konzentrisch im Inneren des Behälters angeordneten Rückführrohres zweckmäßigerweise etwa 1/4 bis 1/3 des Gesamtdurchmessers des Behälters. Dies wirkt sich insbesondere auf das Strömungsverhalten im Behälter sehr günstig aus. Denn die inneren Bereiche des Behälters, die in dieser Ausgestaltung der Erfindung nunmehr durch das Rückführrohr ausgefüllt werden, würden selbst bei sehr hoher Strömungsgeschwindigkeit an den Wänden des Behälters nur sehr langsam zirkular durchströmt. Es bestände deshalb in diesen Bereichen die Gefahr der Bildung einer stärkeren Aufwärtsströmung, welche zu einer Verschlechterung der Durchmischung der Reaktionsflüssigkeit mit dem Gas führen würde. Durch den großen Durchmesser des Rückführrohres wird diese Gefahr in einfacher und funktioneller Weise vermindert.

Um die einzelnen übereinanderliegenden Behälterteile voneinander abzugrenzen und den notwendigen Staudruck erzeugen zu können, ist es zweckmäßig, die Stauwände jeweils dicht an den Behälterwänden und dem zentralen Rückführrohr zu befestigen.

Die Stauwände, die die erfindungsgemäße Vorrichtung von allen bekannten vergleichbaren Konstruktionen unterscheiden, können somit auch dazu dienen, bei Stillstand des Reaktorsystems als Auflage ein Absinken des Trägermaterials bis zum Boden zu vermeiden und es in der jeweiligen Stufenhöhe zurückzuhalten.

Um die gewünschte Zirkularströmung am Boden der jeweiligen Behälterabschnitte zu erzeugen, werden die Drosselöffnungen an den Stauwänden zweckmäßigerweise jeweils mit oberhalb der Stauwände angeordneten Rohrkrümmern od.dgl. versehen, welche die von unten nach oben übertretende Flüssigkeit jeweils oberhalb des Staubleches etwa tangential oder parallel zu der Behälterwandung richten.

Dabei erweist es sich als günstig, die Durchtrittsöffnungen und die strömungsleitenden Rohrstücke od.dgl. jeweils nahe der Behälterwandung anzuordnen, weil hierdurch der in den Behälterteil aus dem Rohrkrümmer od.dgl. austretende Strahl so weit wie möglich an der Behälterwandung entlanggeführt wird und damit die in diesem Behälterteil befindliche Flüssigkeit möglichst effektiv in eine Zirkularströmung versetzt.

Um die Reaktionsflüssigkeit am Ende eines Reaktionszyklus zu entgasen, erweist es sich als vorteilhaft, wenn der drucklose Zentrifugalabscheidebereich mit dem oberen Bereich des vorzugsweise zylindrischen Rückführrohres unterhalb seines oberen Endes identisch ist.

Denn wenn unterhalb der obersten Stauwand eine Übergangsöffnung unmittelbar in das zentrale Rohr vorgesehen und vorzugsweise von einem in den Rohrquerschnitt ragenden Führungsstück gebildet ist und dieses Führungsstück nahe der Wandung des zentralen Rohres etwa tangential gerichtet ist, wird in der gleichen Weise wie in den äußeren Behälterabschnitten eine Zirkularströmung induziert, wobei gleichzeitig eine Rückführungsmöglichkeit der entgasten bearbeiteten Flüssigkeit zum Beginn eines neuen Reaktionszyklus geschaffen wird. Die Austrittsgeschwindigkeit wird dabei zweckmäßigerweise durch entsprechend enge Austrittsöffnungen so groß gewählt, daß sich das spezifisch leichtere Gas durch die hohe Zirkulationsgeschwindigkeit und die dadurch bewirkten großen Zentrifugalkräfte von der Flüssigkeit trennt und in Gasbläschen durch das nach oben offene Rückführungsrohr an die Oberfläche der Flüssigkeit tritt. In konstruktiv sehr einfacher Weise wird hierbei das Rückführrohr selbst als Abscheidegehäuse genutzt und somit eine separate Abscheidekammer überflüssig. Funktionalität sowie einfache und preiswerte Herstellbarkeit werden hier in vorteilhafter Weise miteinander verbunden.

Die Abscheidestufe wird zweckmäßigerweise dadurch ergänzt, daß der Behälter oberhalb der obersten Stauwand eine Querschnittserweiterung aufweist und das zentrale Rohr über die obere Stauwand in den erweiterten Bereich ragt, wobei die Auslaßöffnung für die bearbeitete Flüssigkeit in dem erweiterten Bereich tiefer als die Mündung des zentralen Rohres angeordnet ist. Bei Zuführung von neuer, mit Gas versetzter, unbearbeiteter Flüssigkeit in den Behälterboden wird das im Behälter befindliche Flüssigkeitsvolumen vergrößert, so daß der Flüssigkeitsspiegel im Abscheide- bzw. Rückführrohr ansteigt und schließlich seine Mündung im Querschnitts-erweiterten Bereich des Behälters erreicht. Soll die gesamte in den drucklosen Abscheide- und Rückführungsbereich gelangte Flüssigkeit im Reaktionsbehälter erneut zirkulieren, braucht lediglich die weitere Zuführung von unbearbeiteter Flüssigkeit gestoppt zu werden. Im anderen Fall fließt ein Teil der in den Abscheide- bzw. Rückführungsbereich gelangten Flüssigkeit über den Rand der Mündung des zentralen Rohres in den erweiterten Bereich des Behälters, aus welchem die Abgase nach oben entweichen können und die bearbeitete Flüssigkeit über die Auslaßöffnung austreten kann. Die Häufigkeit der Rezirkulation der zu bearbeitenden Flüssigkeit regelt sich also quasi automatisch durch die Zuführung von unbearbeiteter Flüssigkeit in den Boden des Behälters.

Um die Schaumbildung an der Flüssigkeitsoberfläche im Behälter zu vermindern, kann in dem erweiterten drucklosen Bereich des Behälters eine Sprühvorrichtung zur Beaufschlagung von an der Oberfläche der Flüssigkeit entstehendem Schaum vorgesehen werden.

Die Stauwände sind in dem Behälter vorzugsweise in Abständen von 1 bis 2 m angeordnet, die Höhe des Behälters beträgt vorzugsweise etwa bis zu 8 m und der Gesamtdurchmesser vorzugsweise etwa bis zu 4 m. Weitere Ausgestaltungen der Erfindung ergeben sich aus den Unteransprüchen.

Nachstehend ist die Erfindung mit den ihr als wesentlich zugehörigen Einzelheiten an Hand der Zeichnungen noch näher beschrieben. Es zeigen:

Fig. 1    einen Reaktionsbehälter, dargestellt in einem Schnitt durch seine Längsachse,

Fig. 2    die Draufsicht auf eine senkrecht zur Behälterlängsachse liegende Unterbrechungsebene mit Durchlaßöffnung,

Fig. 3    eine Draufsicht auf eine senkrecht zur Behälterlängsachse liegende Ebene im Bereich des obersten Stauraumes mit Durchtrittsöffnungen in den drucklosen Bereich.

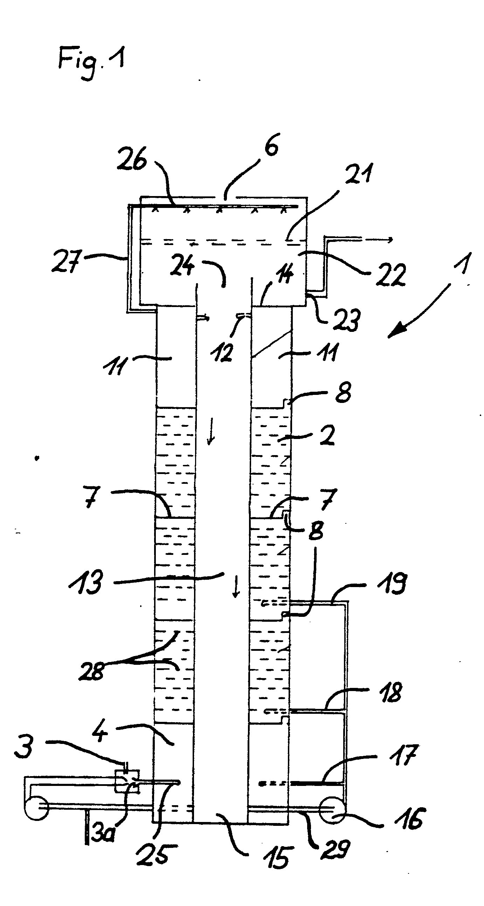

Figur 1 zeigt einen im ganzen mit 1 bezeichneten vertikalen Behälter, der die erfindungsgemäße Vorrichtung zur Durchführung des erfindungsgemäßen Verfahrens enthält. Der Behälter 1 dient in der Regel als Reaktor für biochemische Verfahren, insbesondere zur Behandlung von Abwässern oder Klärschlamm od. dgl. Die im Reaktor behandelte Flüssigkeit 2 wird mit Gas 3, insbesondere Luft oder Sauerstoff versetzt, so daß die Flüssigkeit 2 und das Gas 3 als Dispersion 3a im unteren Bereich 4 des Behälters 1 kontinuierlich in diesen eintreten und die behandelte Flüssigkeit 2 den Behälter in seinen oberen Bereich verläßt, wobei das aus der Dispersion austretende, verbrauchte Gas 6 ebenfalls oben aus dem Behälter 1 geführt wird. Dabei wird im Behälter eine von unten nach oben gerichtete Strömung der Dispersion aufrechterhalten, die im dargestellten Ausführungsbeispiel etwa schraubenförmig verläuft.

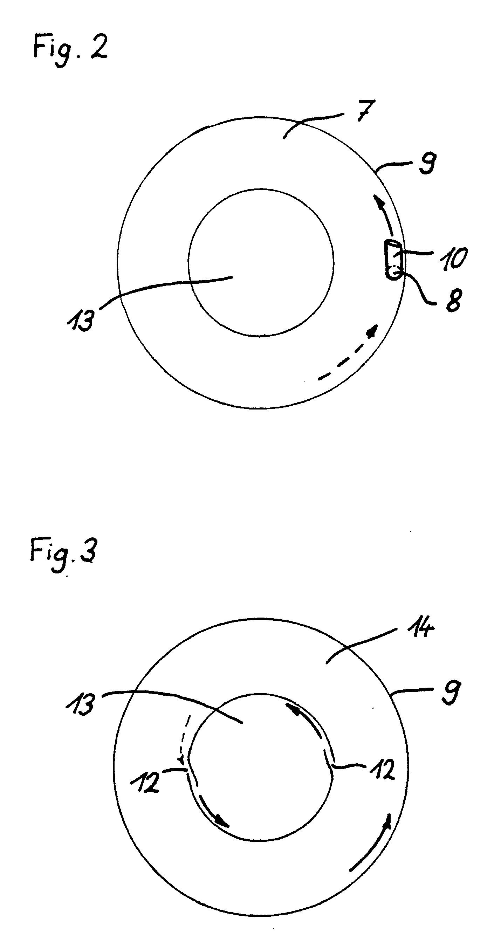

In Figur 1 deutlich erkennbar sind senkrecht zur Flüssigkeitssäule in dieser Säule angebrachte Unterbrechungen 7, die als Stauwände 7 ausgebildet und mit einem Durchlaß 8 versehen sind (vergl. auch Fig. 2). Die aufwärts gerichtete Strömung der Reaktionsflüssigkeit 2 wird durch die Stauwände 7, die die verschiedenen Behälterabschnitte voreinander abgrenzen, gestaut. Um den Durchfluß nach oben trotzdem zu gewährleisten sind in diesen Stauwänden 7, wie bereits angegeben, Durchlaßöffnungen 8 vorgesehen. Die Drosselung der Aufwärtsströmung der Flüssigkeit auf die beschriebene Weise hätte jedoch den Nachteil, daß oberhalb der ersten Stauwand 7 keine Zirkularströmung mehr existieren würde. Aus diesem Grunde sind die Durchtrittsöffnungen 8 tangential zur Wandung 9 des Behälters 1 gerichtet. Auf diese Weise wird in dem jeweils neuen Behälterabschnitt wiederum eine zirkulare Strömung der Reaktionsflüssigkeit induziert. Auf der einen Seite wird also die aufwärts gerichtete Strömung gebremst, auf der anderen Seite die Zirkularströmung bis in den oberen Behälterbereich aufrecht erhalten.

Durch dieses erfindungsgemäße, durch die Vorrichtung realisierte Verfahrensprinzip wird der effektive Weg der Dispersion durch die Reaktionsflüssigkeit wesentlich verlängert, so daß die notwendige Behälterhöhe relativ klein gehalten werden kann. Zusätzlich sorgt der durch die Einleitung der Dispersion 3a in den unteren Behälterteil 4 bewirkte Druck in den Behälterabschnitten für eine Stabilisierung der Dispersion in der Flüssigkeit. Aus diesem Grunde kann auf eine hohe Wassersäule und dadurch bedingt auf einen hohen Behälter 1 verzichtet werden, weil der Druck aufgrund der Stauung an den Unterbrechungen 7 im Behälter in Abhängigkeit von der Menge der zugeführten Flüssigkeit beliebig erhöht werden und somit praktisch jede beliebige Wassersäule simuliert werden kann.

Die in Fig. 1 erkennbaren, mehreren Stauwände 7 mit drosselnden und oberhalb von ihnen tangential zur Behälterwandung angeordneten Durchtrittsöffnungen sind über die Höhe des Behälters gleichmäßig verteilt, um eine möglichst gleichmäßige Zirkularströmung zu erreichen und gleichzeitig die für die Reaktion schädliche aufwärts gerichtete Strömung im Behälter 1 so effektiv wie möglich zu drosseln.

Die Drosselöffnungen 8 an den Stauwänden 7 sind im Ausführungsbeispiel oberhalb der Stauwände 7 als Rohrkrümmer 10 ausgebildet, welche die von unten nach oben übertretende Flüssigkeit 2 jeweils oberhalb des Staubleches etwa tangential oder parallel zu der Behälterwandung richten.

Zur möglichst effektiven Anregung zu einer Zirkularströmung in dem jeweils neuen Behälterabschnitt sind diese Rohrkrümmer 10 jeweils nahe an der Behälterwandung 9 angeordnet (vergl. Fig. 2).

Die Zirkulationsanregung in dem jeweiligen neuen Behälterabschnitt kann noch dadurch verstärkt werden, daß am Boden des jeweils verfahrensmäßig folgenden Behälterabschnitts wenigstens zwei Übergangsströmungen über die Durchtrittsöffnungen 8 in den neuen Behälterabschnitt eingeleitet werden. In den obersten Behälterabschnitt 11, in dem die Reaktionsflüssigkeit 2 gestaut wird, befinden sich an seinem oberen Ende Durchtrittsöffnungen 12, durch welche die Flüssigkeit 2 in ein zentral im Behälter 1 liegendes Rückführrohr 13 eintritt. Der Behälterabschnitt 11 ist dabei nach oben hin durch eine abschließende Stauwand 14 abgeschlossen.

Die aus der Durchtrittsöffnung 12 in das Rückführrohr 13 eintretende Flüssigkeit wird zum Behälterboden 15 zurückgeführt und dort von einer Pumpe 16 wiederum in eine der unteren Behälterkammern eingespeist. Auf diese Weise kann ein mehrfacher Durchlauf und damit eine Verlängerung der Reaktionszeit, die für die Flüssigkeit zur Verfügung steht, erreicht werden.

Diese, durch den Mehrfachdurchlauf u.a. zu erreichende Verlängerung der Reaktionszeit kann dadurch weiter abgestuft werden, daß die Reaktionsflüsskeit durch die vorgesehenen Zuleitungen 17,18,19 in Behälterabschnitte verschiedener Behälterhöhe eingespeist werden kann.

Die zum Bodenbereich 15 des Behälters 1 wieder zurückgeführte Flüssigkeit 2 befindet sich nach ihrem Austritt aus dem oberen Behälterteil 11 in entgastem Zustand. Denn die Durchtrittsöffnungen 12 des obersten Behälterabschnittes 11 sind eng bemessen, so daß sich eine sehr hohe Austrittsgeschwindigkeit der Flüssigkeit 2 in das Rückführrohr 13 ergibt. Die Durchtrittsöffnungen 12 sind hierbei mit Führungsstücken 20 versehen, welche die in das zylindrische Rückführrohr 13 eintretende Strömung etwa tangential nahe dessen Wandung ausrichtet. Die hierdurch bewirkte hohe Zirkulationsgeschwindigkeit der austretenden Strömung bewirkt eine das Gas und die Flüssigkeit trennende Zentrifugalkraft. Während die Flüssigkeit wenigstens teilweise nach unten abgesaugt wird steigt das Gas 3 im Rückführungsrohr 13 in Form von Bläschen an die Oberfläche 21 der Flüssigkeit 2.

Damit das Gas nach oben hin entweichen kann, ist das zentrale Rückführungsrohr 13 nach oben hin offen und mündet oberhalb der letzten Stauwand 14 in einen obersten Behälter 22 der gegenüber dem äußeren Durchmesser des Reaktionsgefäßes 1 in seinem darunter liegenden Bereich eine Querschnittserweiterung aufweist. Der querschnittserweiterte Behälterteil 22 besitzt eine Auslaßöffnung 23 für die bearbeitete Flüssigkeit, welche tiefer als die Mündung 24 des zentralen Rückführungsrohres 13 angeordnet ist. Das verbrauchte Gas, welches nach seiner Zentrifugalabscheidung oben aus der Mündung 24 des Rückführungsrohres 13 austritt, kann oben aus dem querschnittserweiterten Behälter 22 entweichen. An dieser Stelle kann, wenn notwendig, auch eine Abgasreinigungsanlage bzw. Filteranlage angebracht werden.

Die Zahl der Umläufe der Reaktionsflüssigkeit 2 im Reaktionsbehälter 1 und damit zumindest eine mittlere Reaktionszeit des Gases mit der Flüssigkeit kann nun durch die Zuführung von unbearbeiteter Flüssigkeit bzw. von bereits bearbeiteter rückgeführter und durch die Einleitungen 17, 18, 19 in die unteren Behälterabschnitte wieder eingeführter Flüssigkeit 2 geregelt werden. Die Einleitung von zusätzlicher, unbearbeiteter, mit Gas versetzter Flussigkeit 2 durch den Einlaß 25 steigt der Flüssigkeitsspiegel im Rückfuhrungsrohr 13 an, weil immer mehr Reaktionsflüssigkeit 2 durch die Austrittsöffnungen 12 in das Rückführrohr 13 gelangt und ein Abfluß einer zusätzlichen Menge von Flüssigkeit nur über den Mündungsrand der Mündung 24 des Rückführungsrohres 13 in den querschnittsvergrößerten Behälter 22 erfolgen kann. Derjenige Teil der Flüssigkeit 2, der den Rand der Behältermundung 24 überfließt kann über die Austrittsleitung 23 den Behälter 1 verlassen.

Liegt der Flüssigkeitsspiegel unterhalb der Ebene der Mündung 24 des Rückführrohres 13 und wird die Zufuhr von unbearbeiteter Flüssigkeit durch die Einleitung 25 gestoppt, so fließt die im ersten Zyklus bearbeitete Flüssigkeit 2 vollständig in den Bodenbereich 15 der Rückführleitung 13 zurück und wird dort zum Durchlauf eines zweiten, dritten, beliebig mehrfachen Zyklus in die unteren Behälterabschnitte durch die Zuleitungen 17, 18, 19 wieder eingeströmt.

Durch einen kontinuierlichen Zulauf von unbearbeiteter, mit Gas versetzter Flüssigkeit 2 durch die Zuleitung 25 wird ein kontinuierlicher Übertritt der Flüssigkeit 2 aus dem Rückführungsrohr 13 in den querschnittserweiterten Behälter, über die Mündung 24 des Rohres 13 hinweg, bewirkt. Ein anderer Teil der Flüssigkeit gelangt zum Durchlauf eines neuen Zyklus in den Bodenbereich 15 zurück. Auf diese Weise kann die mittlere Verweilzeit der Flüssigkeit 2 im Reaktionsbehälter 1 beliebig variiert werden.

Um einer möglichen Schaumbildung u. a. durch die im drucklosen Bereich des Rohres 13 frei werdenden Gasbläschen zu verhindern, ist eine Sprühvorrichtung 26 im oberen Bereich des querschnittserweiterten Behälters 22 angebracht, die dazu dient, die sich bildenden Bläschen durch ihre Besprühung zu zerstören. Die hierzu notwendige Flüssigkeit wird aus dem obersten unter Druck stehenden Behälterabschnitt 11 über eine Zuführleitung 27 entnommen.

Die Reaktionsgeschwindigkeit in den einzelnen Behälterabschnitten hängt auch in hohem Maße von dem Grad der Konzentration an Mikroorganismen ab. Aus diesem Grunde kann in einen oder in mehrere Behälterabschnitte Trägermaterial 28 (in Fig. 1 gestrichelt dargestellt) eingebracht werden, an dessen Oberfläche sich ein mikrobiologischer Rasen ausbildet, der zur Behandlung der Flüssigkeit 2 dann in dem jeweiligen Behälter dauernd zur Verfügung steht. Das Trägermaterial 28 verbleibt in dem einzelnen Behälterabschnitt, weil es durch die eingestellten Strömungsbedingungen nicht durch die Durchtrittsöffnungen 8 der Stauwände 7 hindurchtreten kann und andererseits auch im Ruhezustand nur bis zum durch die jeweilige Stauwand 7 gebildeten Boden des Behälterabschnittes sinken kann. Die Stauwände 7, welche im Ausführungsbeispiel fest mit der Behälteraußenwand 9, sowie mit dem innenliegenden Rohr 13 verbunden sind,erfüllen somit neben ihrer Staufunktion gleichzeitig eine wichtige Rückhaltefunktion für das Trägermaterial.

Die Einbringung von Trägermaterial ist insbesondere dort von größerer Bedeutung, wo als aktives biologisches Material langsam wachsende oder leicht ausschwemmbare Mikroorganismen vorliegen, wie z.B. insbesondere nitrifizierende Bakterien oder methan-bildende Bakterien. Im Gegensatz zu bekannten Verfahren und Vorrichtungen dieser Art, als Fließbett- oder Wirbelschichttechnik bekannt, wird hier das gesamte Trägermaterial mit dem gebildeten biologischen Rasen in den einzelnen Zylinderabschnitten durch die erzeugte kreisförmige Strömung in kreisender Bewegung gehalten und durch die Dichtunterschiede des Trägermaterials zu dem Reaktionsprodukt nicht in den darüberliegenden Zylinderabschnitt ausgeschwämmt. Einerseits ergibt sich hierdurch eine große Kontaktfläche der Rekationsflüssigkeit 2 mit den Mikroorganismenflächen, andererseits auch eine gute Durchmischung mit Mikroorganismenmasse. Diese Vorteile werden mit gleichzeitiger Immobilisierung der Mikroorganismen im jeweiligen Behälterabschnitt verbunden.

Der Stoffwechselprozeß der Mikroorganismen bewirkt ein Wachstum dieser Mikroorganismen auf den Trägerteilchen. Eine unerwünschte zu dicke biologische Rasenfläche wird jedoch durch die kreisende Bewegung des Trägermaterials und die dadurch bewirkte gegenseitige Reibung der Teilchen aneinander verhindert. Die auf diese Weise bei zu starkem Bewuchs durch die Reibung abgescheuerte überschüssige Rasenstärke wird dann als freies, biologisches Material mit wesentlich geringerem spezifischem Gewicht als in der Verbindung mit den Trägerteilchen über die Durchtrittsöffnungen 8 in den Stauwänden 7 schließlich in das Rückführungsrohr 13 ausgeschwemmt. Diese Selbstreinigung der aktiven Oberfläche des biologischen Rasens gewährleistet immer eine optimale Schichtstärke und biologische Aktivität. Die hier zu behandelnde Flüssigkeit im Reaktionsbehälter 1 wird dabei ohne die Gefahr der Verstopfung im System in vielfachem engen Kontakt mit einer extrem vergrößerten aktiven Oberfläche des Mikroorganismen-Films gebracht. Eine erhebliche Steigerung der Reaktionsgeschwindigkeit ist die Folge.

Als Trägermaterial für die Mikroorganismen eignet sich z.B. gekörnte Aktivkohle, Sand, Braunkohlen, Koks-Peletts, Hartkohle u.a. mit einer Körnung von 0.2 bis 3.0 mm.

Je nach der Dichte des eingesetzten Trägermaterials wird die Zirkulationsgeschwindigkeit im System so festgelegt, daß das Trägermaterial in den einzelnen zylindrischen Behälterabschnitten kreist, ohne daß es sich am Boden des Behälterabschnittes absetzt oder durch die Durchtrittsöffnungen 8 in den Stauwänden 7 in den nächsten, darüberliegenden Behälterabschnitt gelangt. Auf diese Weise kann das stationär im Behälterabschnitt kreisende Trägermaterial von der zu behandelnden Flüssigkeit kreisend von unten nach oben durchlaufen werden.

Die biochemischen Reaktionen im Reaktionsbehälter 1 können dadurch weiter wesentlich beschleunigt werden, daß die Flüssigkeits-Gas-Dispersion 3a in den aufeinander folgenden Behälterstufen jeweils veschiedenen, den Behälterstufen schwerpunktmäßig zugeordneten Arten von Mikroorganismen ausgesetzt wird, die den funktionell-arbeitsteilig bestimmten, jeweiligen biochemischen Umwandlungsschritt optimieren. Hierzu können in den einzelnen Behälterabschnitten die Wachstumsbedingungen, z.B. Gaskonzentration, Temperatur, Verwirbelungsgrad der Dispersion usw. für diejenigen Arten von Mikroorganismen geschaffen werden, welche die dem Behälterabschnitt wenigstens schwerpunktmäßig zugeordnete Umwandlungsreaktion am effektivsten bewirken. Auf diese Weise wird die für die Aufrechterhaltung der Zirkularströmung geschaffene Unterteilung des Behälters in einzelne Behälterabschnitte zur Durchführung eines arbeitsteiligen biochemischen Umwandlungsprozesses verwandt. Die Optimierung der Lebensbedingungen in den einzelnen Behälterabschnitten für bestimmte Arten von Mikroorganismen führt für den Gesamtprozeß, über die einzelnen Behälterabschnitte summiert, zu einer Optimierung der biochemischen Aktivität des Mikroorganismen-Potentials. Im Zusammenhang mit der Verwirbelung von Trägerteilchen für diese Mikroorganismen, die stationär in dem einzelnen Behälterabschnitt verbleiben,ergibt sich eine sehr einfache und wirkungsvolle Möglichkeit, die einzelnen Mirkoorganismenkulturen zwischen den einzelnen Behälterabschnitten zu separieren. Die Einstellung verschiedener Wachstumsbedingungen kann, wenigstens teilweise, durch sehr einfache Maßnahmen erfolgen. Eine höhere Temperatur z.B. läßt sich dadurch einstellen, daß der entsprechende Behälterabschnitt isoliert bzw. weniger gekühlt wird,so daß die bei den chemischen Umwandlungsreaktionen frei werdende Wärme zu einer Aufheizung des Behälterabschnittes führt. Die Variation der Gaskonzentration kann z.B. durch die Veränderung der Zufuhr von Dispersion über die einzelnen Zuführungsleitungen 17,18,19 bewirkt werden. Je nach Zuführung von bereits in einem ersten Zyklus bearbeiteter Reaktionsflüssigkeit in einem bestimmten Behälterbereich, wiederum über die Zuführungsleitungen 17, 18 , 19, kann auch der jeweilige Nährboden für die verschiedenen Mikroorganismenarten optimiert werden.

Für den vorbeschriebenen Behälter, welcher die erfindungsgemäße Vorrichtung für das erfindungsgemäße Verfahren enthält,erweist sich eine Höhe bis zu 8 m und ein Gesamtdurchmesser bis zu etwa 4 m als besonders günstig. Hierbei können die Stauwände in Abständen von 1 bis 2 m angeordnet sein.

Unter diesen gegebenen Bedingungen sollte die Austrittsgeschwindigkeit vom obersten Behälterbereich 11 unterhalb des letzten Staubleches 7 in den drucklosen Rückführungsbereich 13 etwa 10 m/sec. betragen um das verbrauchte Gas von der Flüssigkeit abzuscheiden.

Insgesamt ergibt sich ein einfaches Verfahren und auch eine maschinell wenig aufwendige Vorrichtung, mit welcher erreicht wird, daß die Zirkulationsgeschwindigkeit der Dispersion auch im oberen Teil des Behälters 1 über der Steiggeschwindigkeit der Gasblasen liegt. Auf diese Weise kann der Weg der Gas-Flüssigkeits-Dispersion über die gesamte Höhe des Behälters 1 auf eine Schraubenlinie oder Schraubenfläche verlegt werden, die wesentlich länger als die Behälterhöhe ist.

Unter den dargestellten Bedingungen erweist es sich als besonders zweckmäßig, mit einem 5 bis 15-fachem Kreislauf pro Stunde bezogen auf das Reaktornutzvolumen zu arbeiten. Diese Umlauffrequenz entsprechen Verweilzeiten der Dispersion von 4 bis 12 min. Längere oder kürzere Verweilzeiten lassen sich jedoch bei Bedarf einstellen.

Durch die Möglichkeit der weitgehend freien Wahl der Verweilzeit in dem Reaktorbehälter 1 kann die Gasausnutzung des eingetragenen Gases so gesteuert werden, daß seine bestmögliche Ausnutzung erfolgt, wobei gleichzeitig in vorteilhafter Weise mit beliebigen Konzentrationen an reaktionsfähigem Gas gearbeitet werden kann.

## Patentansprüche

1. Verfahren zur Aufrechterhaltung einer Flüssigkeits-Gas-Dispersion in einem vertikalen Behälter (1), in dessen unterem Bereich die Flüssigkeit (2) und das Gas (3) als Dispersion (3a) kontinuierlich eintreten und dessem oberen Bereich die behandelte Flüssigkeit (2) den Behälter (1) verläßt, wobei das aus der Dispersion (3a) austretende verbrauchte Gas (6) ebenfalls oben aus dem Behälter (1) geführt wird und im Behälter (1) eine von unten nach oben gerichtete Strömung der Dispersion (3a) wenigstens bereichsweise etwa schraubenlinienförmig verläuft und am oberen Ende des Behälters (1) von der aufwärts gerichteten Strömung getrennt abwärts geführt und im Bodenbereich (15) des Behälters (1) in die aufwärts gerichtete Strömung wieder eingeführt wird, wobei ein anderer Teil der Strömung wenigstens zeitweise hinter der obersten Durchtrittsöffnung (12) abgezweigt und zum Austritt des Behälters (1) geleitet wird, **dadurch gekennzeichnet,** daß die aufwärts gerichtete schraubenlinienförmige Strömung wenigstens einmal unterbrochen, im Bereich dieser Unterbrechung (7) gedrosselt und danach weitergeführt wird, und daß die Flüssigkeitsströmung am oberen Ende des Behälters (1) vor einem Austritt gestaut und erneut gedrosselt und hinter der obersten Durchtrittsöffnung (12) zentral im Inneren des Behälters (1) abwärts geführt wird.

2. Verfahren nach Anspruch 1, dadurch gekennzeichnet, daß die nach oben gerichtete, schraubenförmige Strömung mehrmals unterbrochen und an jeder Unterbrechung (7) gedrosselt und hinter der Durchtrittsöffnung (8) erneut als schraubenförmig nach oben gerichtete Strömung fortgesetzt wird.

3. Verfahren nach Anspruch 1 oder 2, dadurch gekennzeichnet, daß in den einzelnen Abschnitten des Behälters (1) ein Überdruck durch die Zufuhr der Flüssigkeits-Gas-Dispersion (3a) und die Unterbrechung (7) bzw. Drosselung der nach oben gerichteten Strömung erzeugt wird.

4. Verfahren nach einem der Ansprüche 1 bis 3, dadurch gekennzeichnet, daß die Übergangsströmung nach der Durchtrittsöffnung (8) am Übergang zwischen zwei voneinander abgeteilten Behälterabschnitten in dem verfahrensgemäß folgenden Behälterabschnitt an dessen unterem Bereich im wesentlichen horizontal und etwa tangential zur Wandung (9) des Benälters (1) geführt wird.

5. Verfahren nach einem der Ansprüche 1 bis 4, dadurch gekennzeichnet, daß auf der Ebene der Unterbrechung (7) Gar aufwärts gerichteten Strömung in dem verfahrensmäßig folgendem Behälterabschnitt wenigstens zwei Übergangsströmungen vorzugsweise am Boden des jeweiligen Behälterabschnittes einander gegenüberliegend weiter geführt werden.

6. Verfahren nach einem der Ansprüche 1 bis 5, dadurch gekennzeichnet, daß die zurückgeführte Flüssigkeit (2) vor ihrem Eintritt in den utnersten Behälterabschnitt (4) aufgeteilt wird.

7. Verfahren nach einem der Ansprüche 1 bis 6, dadurch gekennzeichnet, daß die Eintrittsgeschwindigkeit der Flüssigkeits-Gas-Dispersion (3a) am untersten ersten Eintritt in den Behälter (1) und der Eintrittsdruck für diese Flüssigkeits-Gas-Dispersion (3a) so hoch bemessen werden, daß die über die Höhe des Behälters(1) unterbrochene und abnehmende, hinter der Unterbrechung (7) jeweils erneut aufgebaute Umfangsgeschwindigkeit über der Steiggeschwindigkeit der Gasblasen in der unter Druck stehenden Dispersion (3a) liegt.

8. Verfahren nach einem der Ansprüche 1 bis 7, dadurch gekennzeichnet, daß die Strömung am Austritt (12) aus dem obersten Behälterbereich (11) in einen drucklosen Abscheidebereich (13) etwa tangential in diesem drucklosen Bereich eingeführt und in kreisende Bewegung versetzt und somit einer Zentrifugal-Beschleunigung ausgasetzt wird.

9. Verfahren nach einem der Ansprüche 1 bis 3, dadurch gekennzeichnet, daß in wenigstens einem Behälterabschnitt die Strömung durch ein Trägermaterial (28) für Mikroorganismen geführt wird.

10. Verfahren nach einem der Ansprüche 1 bis 9, dadurch gekennzeichnet, daß die Austrittsgeschwindigkeit vom obersten Behälterbereich (11) in den drucklosen Bereich (13) etwa zehn Meter pro Sekunde beträgt.

11. Verfahren nach einem der Ansprüche 1 bis 10, dadurch gekennzeichnet, daß die Zirkulationsgeschwindigkeit der Flüssigkeit (2) so bemessen wird, daß das Kreisen des Trägermaterials in einzelnen Zylinderabschnitten ohne Absetzungen und ohne Feststoff-Übertritt in den nächsten, darüberliegenden Zylinderabschnitt erfolgt und das Trägermaterial (28) von der Behälterflüssigkeit (2) kreisend von unten nach oben durchlaufen wird.

12. Vorrichtung zur Aufrechterhaltung einer Flüssigkeits-Gas-Dispersion in einen vertikalen Behälter mit einem Zulauf für die Flüssigkeit und das Gas, mit einem Ablauf der Flüssigkeit im oberen Bereich des Behälters und mit einem Auslaß für das verbrauchte Gas ebenfalls im oberen Bereich des Behälters, wobei im Behälter eine von unten nach oben gerichtete Strömung der Dispersion aufrechterhalten wird und der Eintritt des Zulaufes in dem Behälter nahe seinem Boden etwa tangential zur Wandung angeordnet ist und wobei ferner im Inneren des Behälters eine zum Behälterboden führende Rückführleitung zum Zurückführen wenigstens eines Teiles der nach oben geströmten Flüssigkeit wieder in den Bodenbereich vorgesehen ist, **dadurch gekennzeichnet,** daß im Querschnitt des Behälters (1) oberhalb des Eintrittes (25) wenigstens eine den von unten nach oben durchströmten Behälterquerschnitt ausfüllende und abdichtende Stauwand (7) vorgesehen ist, die zumindest eine oberhalb von ihr tangential zur Wandung (9) des Behälters (1) gerichtete Durchtrittsöffnung (8) für die Fortsetzung der Strömung der Flüssigkeits-Gas-Dispersion (3a) hat, und daß der Behälter (1) in seinem oberen Bereich (11) eine abschließende Stauwand (14) für die aufwärts gerichtete Strömung aufweist und der obere Behälterbereich (11) mit der Rückführleitung (13) über wenigstens eine Durchtrittsöffnung (12) verbunden ist.

13. Vorrichtung nach Anspruch 12, dadurch gekennzeichnet, daß über die Höhe des Behälters (1) mehrere Stauwände (7) mit drosselnden und oberhalb von ihnen tangential zur Behälterwandung (9) angeordneten Durchtrittsöffnungen (8) vorzugsweise etwa gleichmäßig über die Höhe des Benälters (1) verteilt, vorgesehen sind.

14. Vorrichtung nach Anspruch 12 oder 13, da-. durch gekennzeichnet, daß die Durchtrittsöffnungen (8) an den Stauwänden (7) jeweils mit oberhalb der Stauwände (7) angeordneten Rohrstücken der Rohrkrümmern (10) versehen sind, welche die von unten nach oben übertretende Flüssigkeit jeweils oberhalb des Staubleches (7) etwa tangential oder parallel zu der Behälterwandung (9) richten.

15. Vorrichtung nach einem der Ansprüche 12 bis 14, dadurch gekennzeichnet, daß die Durchtrittsöffnungen (8) und die strömungsleitenden Rohrstücke (10) jeweils nahe der Behälterwandung (9) angeordnet sind.

16. Vorrichtung nach einem der Ansprüche 12 bis 15, dadurch gekennzeichnet, daß die Zuführleitungen (29) für wenigstens einen Teil der rezirkulierten Flüssigkeit aus Rückführung (13) wenigstens eine Abzweigung (17,18,19) haben, die oberhalb einer Stauwand (7) vorzugsweise tangential und nahe der Stauwand (7) mündet.

17. Vorrichtung nach einem der Ansprüche 12 bis 16, dadurch gekennzeichnet, daß die Rückführleitung (13) von dem oberen zu dem unteren Behälterbereich als vorzugsweise zentrales Rohr im Inneren des Behälters (1) ausgebildet ist, welches gleichzeitig mit dem oberen Austrittsbereich für die bearbeitete Flüssigkeit (2) und das aus der Dispersion (3a) freiwerdende Gas verbunden ist.

18. Vorrichtung nach einem der Ansprüche 12 bis 17, dadurch gekennzeichnet, daß unterhalb der obersten Stauwand (14) eine Durchtrittsöffnung (12) unmittelbar in das zentrale Rohr vorgesehen und vorzugsweise von einem in den Rohrquerschnitt ragenden Führungsstück (12) gebildet ist.

19. Vorrichtung nach einem der Ansprüche 12 bis 18, dadurch gekennzeichnet, daß die vorhandenen Führungsstücke (12) am Übergang vom obersten Behälterbereich (11) unterhalb der letzten Stauwand (14) in das zentrale Rohr (13) innerhalb dieses zentralen Ronres (13) nahe dessen Wandung etwa tangential gerichtet sind.

20. Vorrichtung nach einem der Ansprüche 12 bis 19, dadurch gekennzeichnet, daß der Behälter oberhalb der obersten Stauwand (14) eine Querschnittserweiterung aufweist und das zentrale Rohr (13) über die obere Stauwand (14) in den erweiterten Bereich (22) ragt, wobei die Auslaßöffnung (23) für die bearbeitete Flüssigkeit (2) in dem erweiterten Bereich (22) tiefer als die Mündung (24) des zentralen Rohres (13) angeordnet ist.

21. Vorrichtung nach einem der Ansprüche 12 bis 20, dadurch gekennzeichnet, daß die Stauwände (7) jeweils dicht an den Behälterwänden (9) und dem zentralen Rückführrohr (13) befestigt sind.

**Claims**

1. A method of maintaining a liquid-gas dispersion in a vertical vessel (1), the liquid (2) and the gas (3) continuously entering the lower zone of the vessel as a dispersion (3a) and the treated liquid (2) departing from the upper zone of the vessel (1), the spent gas (6) issuing from the dispersion (3a) likewise being conducted out of the vessel (1) at the top, and in the vessel (1) a bottom to top flow of the dispersion (3a) taking a course which, at least in areas, is approximately helicoidal and at the upper end of the vessel (1) being conducted downwards separately from the upflow and in the bottom zone (15) of the vessel (1) being re-introduced into the upflow, another part of the flow being branched off at least intermittently after the uppermost opening (12) and being diverted to the outlet of the vessel (1), **characterized in that** the helicoidal upflow is interrupted or intercepted at least once, is throttled in the zone of said interception (7) and thereafter conducted further, and that at the upper end of the vessel (1) the fluid flow is stemmed in front of an outlet and is throttled again and after the uppermost opening (12) is conducted downwards centrally in the interior of the vessel (1).

2. A method as claimed in claim 1, characterized in that the helical upflow is interrupted or intercepted several times and is throttled at each interception (7) and after the opening (8) is recontinued as a helical upflow.

3. A method as claimed in claim 1 or claim 2, characterized in that in the individual sections of the vessel (1) an overpressure is generated by the supply of the liquid-gas dispersion (3a) and the interception (7) and throttling of the upflow.

4. A method as claimed in any one of claims 1 to 3, characterized in that after the opening (8) at the transition between two separated sections of the vessel, the transition flow in the lower zone of the next vessel section in the process is conducted substantially horizontally and approximately tangentially to the wall (9) of the vessel (1).

5. A method as claimed in any one of claims 1 to 4, characterized in that on the plane of the interception (7) of the upflow in the next vessel section in the process at least two transition flows, preferably opposite one another at the bottom of the respective vessel section, are conducted further.

6. A method as claimed in any one of claims 1 to 5, characterized in that the recycled liquid (2) is split up before entering the lowermost vessel section (4).

7. A method as claimed in any one of claims 1 to 6, characterized in that the admission velocity of the liquid-gas dispersion (3a) at the lowermost first intake into the vessel (1) and the admission pressure for said liquid-gas dispersion (3a) are determined to be so high that the speed at which the gas bubbles rise in the dispersion (3a) under pressure is exceeded by the peripheral speed which is interrupted and decreases over the height of the vessel (1) and is in each case built up again after the interception (7).

8. A method as claimed in any one of claims 1 to 7, characterized in that the flow at the outlet (12) from the uppermost vessel zone (11) into a pressureless separating zone (13) is introduced approximately tangentially in said pressureless zone, is set into circulating motion and therefore subject to a centrifugal acceleration.

9. A method as claimed in any one of claims 1 to 8, characterized in that in at least one section of the vessel the flow is conducted through a carrier material (28) for microorganisms.

10. A method as claimed in any one of claims 1 to 9, characterized in that the delivery speed from the uppermost vessel zone (11) into the pressureless zone (13) is approximately 10 metres per second.

11. A method as claimed in any one of claims 1 to 10, characterized in that the rate of circulation of the liquid (2) is determined such that the carrier material circulates in the various sections of the cylinder without settling and without solids passing into the next superposed cylinder section and the carrier material (28) is traversed by the liquid (2) circulating from bottom to top.

12. An apparatus for maintaining a liquid-gas dispersion in a vertical vessel including an inlet for the liquid and gas, including an outlet of the liquid in the upper zone of the vessel and further including an outlet for the spent gas likewise in the upper zone of the vessel, in the vessel the dispersion being maintained in a flow directed from the bottom to the top and the inlet in the vessel being disposed near the bottom thereof and approximately tangentially to the wall, furthermore in the interior of the vessel a return line being provided which leads to the bottom of the vessel and serves to recycle at least part of the upflow back to the bottom zone, **characterized in that** in the cross section of the vessel (1), above the intake (25), at least one retaining wall (7) is provided filling and sealing that cross section of the vessel through which the flow passes from bottom to top, said retaining wall (7) having at least one upstream opening (8) which is directed tangentially to the wall (9) of the vessel (1) and serves for the continuation of the flow of the liquid-gas dispersion (3a), and that the vessel (1) in the upper zone (11) thereof has an end retaining wall (14) for the upflow and the upper zone (11) of the vessel communicates with the return line (13) by way of at least one opening (12).

13. An apparatus as claimed in claim 12, characterized in that a plurality of retaining walls (7) are provided having upstream, throttling openings (8) arranged tangentially to the wall (9) of the vessel, said retaining walls preferably being distributed approximately uniformly over the height of the vessel (1).

14. An apparatus as claimed in claim 12 or claim 13, characterized in that the openings (8) at the retaining walls (7) are provided in each case with upstream pipe members or pipe bends (10), the liquid passing from the bottom to the top being pointed above the retaining plate (7) by said pipe members or pipe bends in a direction approximately tangential or parallel to the vessel wall (9).

15. An apparatus as claimed in any one of claims 12 to 14, characterized in that the openings and the pipe members (10) conducting the flow are in each case disposed near the vessel wall (9).

16. An apparatus as claimed in any one of claims 12 to 15, characterized in that the feed lines (29) for at least part of the re-circulated liquid from the return line (13) have at least one branch (17,18,19) opening out above a retaining wall (7), preferably tangentially and close to the retaining wall (7).

17. An apparatus as claimed in any one of claims 12 to 16, characterized in that the return line (13) from the upper to the lower zone of the vessel takes the form of a preferably central pipe in the interior of the vessel (1), which pipe simultaneously communicates with the upper outlet zone for the treated liquid and the gas released from the dispersion (3a).

18. An apparatus as claimed in any one of claims 12 to 17, characterized in that underneath the uppermost retaining wall (14) an opening (12) is provided directly into the central pipe and is preferably formed by a guide member (12) projecting into the cross section of the pipe.

19. An apparatus as claimed in any one of claims 12 to 18, characterized in that the guide members (12) present at the transition from the uppermost vessel zone (11) underneath the last retaining wall (14) into the central pipe (13) are directed inside said central pipe (13) approximately tangentially near the wall thereof.

20. An apparatus as claimed in any one of claims 12 to 19, characterized in that above the uppermost retaining wall (14) the vessel has an enlargement of cross sectional area, and the central pipe (13) projects above the upper retaining wall (14) into the enlarged area (22), the outlet orifice (23) for the treated liquid (2) being disposed lower in the enlarged area (22) than the mouth (24) of the central pipe (13).

21. An apparatus as claimed in any one of claims 12 to 20, characterized in that the retaining walls (7) are in each case tight-fitted to the vessel walls (9) and the central return pipe (13).

**Revendications**

1. Procédé pour maintenir une dispersion liquide-gaz dans un conteneur vertical (1) dans la région inférieure duquel le liquide (2) et le gaz (3) entrent en continu sous la forme d'une dispersion (3a) et dans la région supérieure duquel le liquide traité (2) quitte le conteneur (1), cependant que le gaz utilisé (6) sortant de la dispersion (3a) est également amené hors du conteneur (1) en haut de celui-ci, et qu'un écoulement de la dispersion (3a) dirigé de bas en haut s'étend sensiblement en forme de vis dans le conteneur (1), au moins par zones, qu'à l'extrémité supérieure du conteneur (1), il est dirigé vers le bas en étant séparé de l'écoulement dirigé vers le haut et que, dans la région du fond (15) du conteneur (1), il est à nouveau introduit dans l'écoulement dirigé vers le haut, une autre partie de l'écoulement étant dérivée derrière l'orifice de passage le plus élevé (12), du moins par périodes, et conduite à la sortie du conteneur (1), caractérisé par le fait que l'écoulement dirigé vers le haut en forme de vis est au moins une fois interrompu et étranglé dans la région de cette interruption (7) pour continuer ensuite, et par le fait que l'écoulement du liquide est accumulé et étranglé à nouveau avant une sortie à l'extrémité supérieure du conteneur (1), et conduit centralement vers le bas dans l'intérieur du conteneur (1) derrière l'orifice de passage le plus élevé (12).

2. Procédé selon la revendication 1, caractérisé par le fait que l'écoulement dirigé vers le haut en forme de vis est interrompu plusieurs fois et étranglé à chaque interruption (7) et que, derrière l'orifice de passage (8), il se poursuit à nouveau sous la forme d'un écoulement en vis dirigé vers le haut.

3. Procédé selon la revendication 1 ou 2, caractérisé par le fait qu'une surpression est engendrée dans les diverses sections du conteneur (1) par l'amenée de la dispersion liquide-gaz (3a) et par l'interruption (7) ou l'étranglement de l'écoulement dirigé vers le haut.

4. Procédé selon l'une des revendications 1 à 3, caractérisé par le fait que l'écoulement de passage après l'orifice de passage (8), lors du passage entre deux sections du conteneur séparées l'une de l'autre vers la section du conteneur qui suit selon le procédé, est guidé dans la région inférieure de celui-ci de manière horizontale pour l'essentiel et à peu près tangentiellement par rapport à la paroi (9) du conteneur (1).

5. Procédé selon l'une des revendications 1 à 4, caractérisé par le fait que, sur le plan de l'interruption (7) de l'écoulement dirigé vers le haut, dans la section du conteneur qui suit selon le procédé, au moins deux écoulements de passage sont amenés à se faire face, de préférence au fond de chaque section du conteneur.

6. Procédé selon l'une des revendications 1 à 5, caractérisé par le fait qu'avant son entrée dans la section la plus basse (4) du conteneur, le liquide refoulé (2) est séparé, et au moins une partie du liquide (2) est amenée à la section ou aux sections du conteneur, tangentiellement par rapport à la paroi (9) du conteneur (1), au-dessus d'une interruption (7) de l'écoulement.

7. Procédé selon l'une des revendications 1 à 6, caractérisé par le fait que la vitesse d'entrée de la dispersion liquide-gaz (3a) à la première entrée la plus basse dans le conteneur (1) et la pression d'entrée de cette dispersion liquide-gaz (3a) sont calculées de telle façon que la vitesse périphérique qui est interrompue et diminue sur la hauteur du conteneur (1), et qui est à chaque fois établie à nouveau derrière l'interruption (7), soit supérieure à la vitesse de montée des bulles de gaz dans la dispersion (3a) qui est sous pression.

8. Procédé selon l'une des revendications 1 à 7, caractérisé par le fait que l'écoulement, à sa sortie (12) de la région (11) la plus haute du conteneur vers une zone de séparation sans pression (13), est introduit de manière sensiblement tangentielle dans cette zone de séparation sans pression, et déplacé en un mouvement circulaire, et ainsi soumis à une accélération centrifuge.

9. Procédé selon l'une des revendications 1 à 8, caractérisé par le fait que, dans l'une au moins des sections du conteneur, on fait passer l'écoulement à travers une matière porteuse (28) pour des micro-organismes.

10. Procédé selon l'une des revendications 1 à 9, caractérisé par le fait que la vitesse de sortie de la zone supérieure (11) du conteneur vers la zone sans pression (13) est d'environ dix mètres par seconde.

11. Procédé selon l'une des revendications 1 à 10, caractérisé par le fait que la vitesse de circulation du liquide (2) est calculée de telle manière que la matière porteuse qui tourne dans les diverses sections du cylindre passe sans dépôts et sans passage de matières solides dans la section de cylindre suivante située au-dessus, et que la matière porteuse (28) est parcourue de bas en haut en tournant par le liquide (2) du conteneur.

12. Dispositif pour maintenir une dispersion liquide-gaz dans un conteneur vertical avec une arrivée pour le liquide et le gaz, une sortie pour le liquide à la région supérieure du conteneur et avec une sortie d'échappement pour le gaz utilisé, également dans la région supérieure du conteneur, un écoulement de la dispersion dirigé de bas en haut étant maintenu dans le conteneur et l'entrée de l'arrivée dans le conteneur étant montée près de son fond de manière sensiblement tangentielle à la paroi, et une conduite de retour conduisant vers le fond du conteneur étant prévue, en outre, à l'intérieur du conteneur pour renvoyer à nouveau dans la région du fond au moins une partie du liquide en écoulement vers le haut, caractérisé par le fait que, dans la section transversale du conteneur (1) située au-dessus de l'arrivée (25), il est prévu au moins une paroi d'étranglement (7) qui remplit et rend étanche la section transversale du conteneur traversée de bas en haut, et qui comprend au moins un orifice de passage (8) dirigé au-dessus d'elle tangentiellement par rapport à la paroi (9) du conteneur (1) pour la poursuite de l'écoulement de la dispersion liquide-gaz (3a), et que le conteneur (1) comporte dans sa région supérieure (11) une paroi d'étranglement et de fermeture (14) pour l'écoulement dirigé vers le haut et la région supérieure (11) du conteneur est reliée à la conduite de retour (13) par au moins un orifice de passage (12).

13. Dispositif selon la revendication 12, caractérisé par le fait que sont prévues, sur la hauteur du conteneur (1), plusieurs parois d'étranglement (7) munies d'orifices de passage (8) réalisant un étranglement et montées au-dessus d'elles tangentiellement par rapport à la paroi (9) du conteneur, en étant de préférence réparties de manière sensiblement régulière sur la hauteur du conteneur (1).

14. Dispositif selon la revendication 12 ou 13, caractérisé par le fait que chaque orifice de passage (8) des parois d'étranglement (7) est muni de tronçons de tube ou des tubes coudés (10) montés au-dessus des parois d'étranglement (7) qui dirigent chacun le liquide passant de bas en haut par-dessus la tôle d'étranglement (7) de façon à ce qu'il soit sensiblement tangentiel ou parallèle à la paroi (9) du conteneur.

15. Dispositif selon l'une des revendications 12 à 14, caractérisé par le fait que les orifices de passage (8) et les tronçons de tube (10) qui conduisent l'écoulement sont montés chacun au voisinage de la paroi (9) du conteneur.

16. Dispositif selon l'une des revendications 12 à 15, caractérisé par le fait que les conduites d'amenée pour au moins une partie du liquide recyclé depuis la conduite de retour (13) comportent au moins un embranchement (17, 18, 19) qui débouche au-dessus d'une paroi d'étranglement (7) en étant, de préférence, tangent à la paroi d'étranglement (7) et proche de celle-ci.

17. Dispositif selon l'une des revendications 12 à 16, caractérisé par le fait que la conduite de retour (13) allant de la zone supérieure à la zone inférieure du conteneur est réalisée sous la forme d'un tube, de préférence central, à l'intérieur du conteneur (1), lequel est relié simultanément à la zone de sortie supérieure du liquide traité (2) et du gaz libéré de la dispersion (3a).

18. Dispositif selon l'une des revendications 12 à 17, caractérisé par le fait qu'un orifice de passage (12) est prévu, directement dans le tube central et au-dessous de la paroi d'étranglement supérieure, (14), et qu'il est formé, de préférence, d'une pièce de guidage (12) faisant saillie dans la section transversale du tube.

19. Dispositif selon l'une des revendications 12 à 18, caractérisé par le fait que les pièces de guidage (12) présentes au passage de la zone supérieure (11) du conteneur, au-dessous de la dernière paroi d'étranglement (14), dans le tube central (13), sont dirigées de manière sensiblement tangentielle à l'intérieur de ce tube central (13), en étant proches de sa paroi.

20. Dispositif selon l'une des revendications 12 à 19, caractérisé par le fait que le conteneur présente un élargissement de sa section au-dessus de la paroi d'étranglement supérieure (14), et que le tube central (13) fait saillie dans la zone élargie (22) au-dessus de la paroi d'étranglement supérieure (14), l'ouverture de sortie (23) du liquide traité (2) étant disposée dans la zone élargie (22) à un niveau inférieur à celui (24) où débouche le tube central (13).

21. Dispositif selon l'une des revendications 12 à 20, caractérisé par le fait les parois d'étranglement (7) sont fixées à chaque fois près des parois (9) du conteneur et du tube central de retour (13).

Fig. 1

Fig. 2

Fig. 3